# EUROPÄISCHE PATENTSCHRIFT

(11) **EP 3 012 467 B1**
(45) Veröffentlichungstag und Bekanntmachung des Hinweises auf die Patenterteilung: **27.03.2019**
(21) Anmeldenummer: 15190884.5
(22) Anmeldetag: 21.10.2015
(51) Int. Cl.: F16B 11/00

(54) **KRAFTEINLEITUNGSELEMENT SOWIE DESSEN VERWENDUNG**
FORCE TRANSMISSION ELEMENT AND ITS USE
ÉLEMENT D'APPLICATION DE FORCE ET SON UTILISATION

(30) Priorität: 21.10.2014 DE 102014015444; 18.12.2014 DE 102014118930
(43) Veröffentlichungstag der Anmeldung: 27.04.2016
(73) Patentinhaber: Bossard AG, 6301 Zug (CH)
(72) Erfinder: Pfister, Werner, 5608 Stetten (AG) (CH); Beer, Florian, 93133 Burglengenfeld (DE)
(74) Vertreter: Rüedi, Regula Béatrice

(56) Entgegenhaltungen:
- EP-A1- 0 638 748
- WO-A1-2012/085078
- WO-A1-2013/101831
- DE-A1-102012 003 937
- DE-U1-202012 012 527

## Beschreibung

### Technisches Gebiet

Die vorliegende Erfindung betrifft ein gattungsgemäßes Krafteinleitungselement (sogenannter bonding fastener) gemäß dem Oberbegriff des Anspruchs 1 bzw. des Anspruchs 2.

### Stand der Technik

Derartige gattungsgemäße Krafteinleitungselemente (vgl. EP 2 655 183 A1) weisen einen Gewindebolzen als Befestigungsteil sowie eine planebene massive Grundplatte, gegebenenfalls mit Ausnehmungen, als flächigen Anlageteil auf. Auf der Unterseite des Anlageteils wird dann ein Klebstoff aufgebracht, wobei nur Ein- und Zweikomponentenklebstoffe eingesetzt werden können.

Derartige Ein- und Zweikomponentenklebstoffe sind aber in der Serienfertigung kaum einsetzbar, denn sie haben lange Aushärtzeiten, durch die die Produktionsleistung erheblich verringert wird. Weiterhin erfordert diese Art der Anbindung stets plane Flächen, die zusätzlich mit eingeplant und konstruktiv umgesetzt werden müssen.

Zum technologischen Hintergrund der vorliegenden Erfindung kann auf die DE 10 2012 003 937 A1 oder auf die EP 0 638 748 A1 aufmerksam gemacht werden.

### Darstellung der vorliegenden Erfindung: Aufgabe, Lösung, Vorteile

Ausgehend von den vorstehend dargelegten Nachteilen und Unzulänglichkeiten sowie unter Würdigung des umrissenen Stands der Technik liegt der vorliegenden Erfindung die Aufgabe zugrunde, ein Krafteinleitungselement gemäß dem Oberbegriff des Anspruchs 1 bzw. des Anspruchs 2 so weiterzubilden, dass das Krafteinleitungselement auch an nicht planebenen Oberflächen und in kürzester Zeit fest angebracht werden kann.

Diese Aufgabe wird bei einem Krafteinleitungselement gemäß dem Oberbegriff des Anspruchs 1 bzw. des Anspruchs 2 erfindungsgemäß durch dessen kennzeichnende Merkmale gelöst. Vorteilhafte Ausführungsformen der vorliegenden Erfindung sind in den abhängigen Ansprüchen gekennzeichnet; zweckmäßige Weiterbildungen der vorliegenden Erfindung sind in den nebengeordneten Ansprüchen gekennzeichnet.

Die vorliegende Erfindung beruht also darauf, dass ein Krafteinleitungselement
- einen flächigen Anlageteil, der mit einer zum Festlegen an einer Schicht innerhalb eines Substrats oder an der Oberfläche eines Gegenstands dienenden Unterseite und mit einer dieser Unterseite entgegengesetzt abgewandten Oberseite versehen ist, und
- einen von der Oberseite vorspringenden, zum form-, kraft- und/oder stoffschlüssigen Anlenken von Drittgegenständen dienenden Befestigungsteil aufweist.

Erfindungsgemäß ist der Anlageteil so ausgestaltet, dass dessen Unterseite als an die Form der Schicht anschmiegend verformbar ausgebildet ist.

Hierbei ist der Anlageteil in seinem Ausgangszustand nicht notwendigerweise eben oder plan ausgebildet. Der Anlageteil kann, zum Beispiel mittels einer Matrize oder mittels einer Patrize, vorgeformt sein oder während des Applizierens in oder auf den Gegenstand verformt werden.

Insbesondere ist der flächige Anlageteil des Krafteinleitungselements so ausgebildet, dass anstelle einer massiven Grundplatte wie beim Stand der Technik ein verformbarer Werkstoff eingesetzt wird, der an die Form der Lage bzw. Schicht oder der Oberfläche des Gegenstands am Anbringungsort angeschmiegt angepasst wird. Damit lässt sich das erfindungsgemäße Krafteinleitungselement nicht nur an einer planebenen Oberfläche einsetzen.

Der Anlageteil ist von der Oberseite zur Unterseite über letzterer gesamte Fläche, insbesondere im Wesentlichen gleichmäßig, lichtdurchlässig ausgebildet, so dass ein licht-, zum Beispiel mittels einer U[ltra]V[iolett]-Lichtquelle härtender Klebstoff eingesetzt werden kann, dessen gesamtes Volumen in wenigen Sekunden aushärtet, was wegen der gegebenenfalls wenigen Ausnehmungen in der ansonsten massiven Grundplatte beim gattungsgemäßen Stand der Technik nur im Bereich der Ausnehmungen möglich wäre.

Im Speziellen ist es zweckmäßigerweise möglich, das erfindungsgemäße Krafteinleitungselement an die mit dem UV-härtbaren Klebstoff versehene Oberfläche in dieser elastisch verformten, aber nicht formstabilen Lage des Anlageteils so lange anzudrücken, bis der Klebstoff ausgehärtet ist, oder aber es erfolgt ein Verformen vor oder bei dem Andrücken, so dass der Anlageteil bereits vor dem Kleben formstabil ist.

Damit kann das erfindungsgemäße Krafteinleitungselement insbesondere in der Serienfertigung, zum Beispiel von Automobilen, eingesetzt werden. Des Weiteren ist das erfindungsgemäße Krafteinleitungselement allgemein im Fahrzeug- und Schiffsbau wie auch im Bereich des Maschinenbaus, der Dekoration und des Modellbaus anwendbar, zum Beispiel dann, wenn als Material Karbon eingesetzt wird.

### Kurze Beschreibung der Zeichnungen

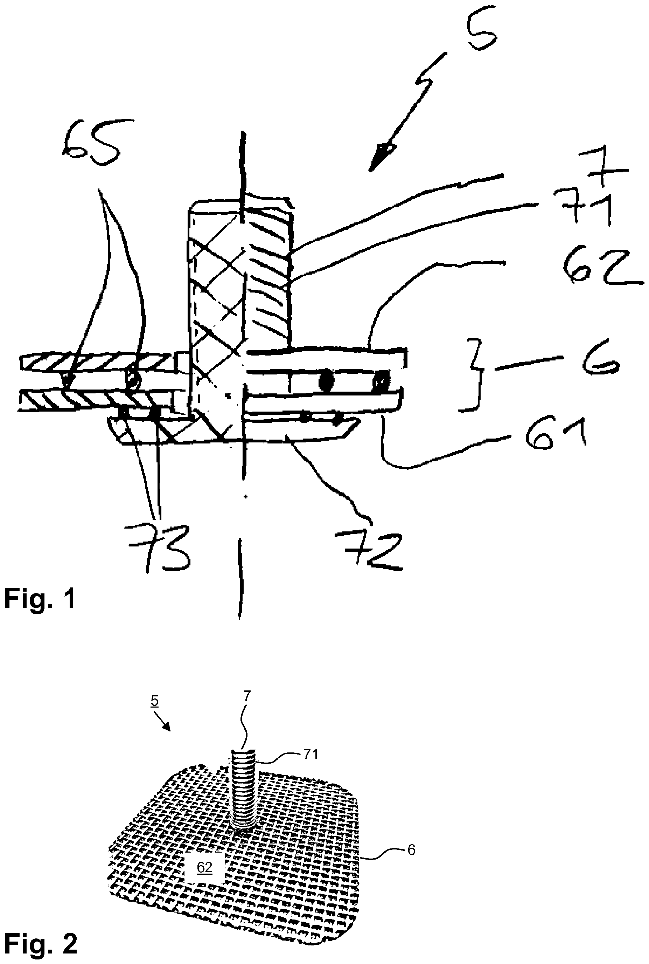

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die den Ansprüchen 1 und 2 sowie dem Anspruch 13 nachgeordneten Ansprüche verwiesen, andererseits werden weitere Ausgestaltungen, Merkmale und Vorteile der vorliegenden Erfindung nachstehend unter anderem anhand der durch Fig. 1 und durch Fig. 2 veranschaulichten Ausführungsbeispiele näher erläutert.

Es zeigt:
- Fig. 1: in schematischer Seiten-/Querschnittansicht ein erstes Ausführungsbeispiel eines Krafteinleitungselements gemäß der vorliegenden Erfindung; und
- Fig. 2: in perspektivischer Aufsicht ein zweites Ausführungsbeispiel eines Krafteinleitungselements gemäß der vorliegenden Erfindung.

Gleiche oder ähnliche Ausgestaltungen, Elemente oder Merkmale sind in Fig. 1 und in Fig. 2 mit identischen Bezugszeichen versehen. Die Dimensionierung der einzelnen Elemente oder Merkmale, insbesondere in Relation zueinander, ist in Fig. 1 und in Fig. 2 nicht notwendigerweise maßstabsgerecht.

### Bester Weg zur Ausführung der vorliegenden Erfindung

Das insgesamt mit dem Bezugszeichen 5 bezeichnete Krafteinleitungselement weist einen flächigen Anlageteil 6 von beliebiger, zum Beispiel quadratischer oder rechteckiger oder kreisrunder, Formgebung und von lastabhängiger Größe auf.
Der Anlageteil 6 ist mit einer zum Festlegen an einer Lage bzw. Schicht innerhalb eines Substrats oder an der Oberfläche eines Gegenstands dienenden Unterseite 61 und mit einer dieser Unterseite 61 entgegengesetzt abgewandten Oberseite 62 versehen.
Von dieser Oberseite 62 springt zum form-, kraft- und/oder stoffschlüssigen Anlenken von Drittgegenständen ein Befestigungsteil 7 vor, der als am Anlageteil 6 form-, kraft- und/oder stoffschlüssig festgelegt ausgebildet ist; insbesondere ist der Kopfteil 72 des, zum Beispiel als Bolzen mit Außengewinde 71 oder als Buchse oder als Öse oder als Stift ausgebildeten, Befestigungsteils 7 mit der Unterseite 61 des Anlageteils 6 fest verbunden (Bezugszeichen 73).
Der Anlageteil 6 weist zwei versetzt übereinander angeordnete Lagen eines als Metallgewebe ausgebildeten Metallgitters 65 auf, wobei dessen Unterseite 61 als an die Form der Lage/Schicht oder Oberfläche des Gegenstands anschmiegend verformbar ausgebildet ist. Hierbei ist der Anlageteil 6 so ausgestaltet, dass dessen Unterseite 61 als nach dem Verformen formstabil ausgebildet ist.

Der Anlageteil 6 ist offen strukturiert, von seiner Oberseite 62 zu seiner Unterseite 61 über die gesamte Fläche vorzugsweise gleichmäßig lichtdurchlässig, vor allem für UV-Licht. Damit ist es möglich, das Krafteinleitungselement 5 an die zum Beispiel mit UV-härtbarem Klebstoff versehene Oberfläche des Gegenstands in dieser elastisch verformten, aber nicht formstabilen Lage des Anlageteils 6 so lange anzudrücken, bis der Klebstoff ausgehärtet ist.

Alternativ kann der Anlageteil 6 vor oder bei dem Andrücken so verformt werden, dass der Anlageteil 6 bereits vor dem Kleben formstabil ist, womit das Krafteinleitungselement 5 in der Serienfertigung, zum Beispiel von Automobilen, eingesetzt werden kann.

Alternativ zum UV-Kleben kann auch eine thermische Härtung vorgenommen werden, wobei bei erwärmtem Anlageteil 6 die Wärme als Aktivator auf den Klebstoff übergeht. Neben einer thermischen Härtung können auch verfügbare konventionelle Klebstoffe eingesetzt werden.

Der Aushärtprozess kann auch mittels Induktionserwärmung und/oder mittels Widerstandserwärmung erfolgen oder zumindest ergänzt werden.

Alternativ zum Ankleben auf der Oberfläche des Gegenstands kann der Anlageteil 6 auch an der Lage oder Schicht im Inneren des Substrats laminiert werden; der Anlageteil 6 kann im Falle eines Lagen- oder Schichtenaufbaus des Substrats, insbesondere eines Laminats, also einlaminiert werden.

Das erfindungsgemäße Krafteinleitungselement 5 kann im Fahrzeug- und Schiffsbau wie auch im Bereich des Maschinenbaus, der Dekoration und des Modellbaus eingesetzt werden, zum Beispiel dann, wenn als Material Karbon eingesetzt wird

### Bezugszeichenliste

- 5: Krafteinleitungselement
- 6: Anlageteil
- 61: Unterseite des Anlageteils 6
- 62: Oberseite des Anlageteils 6
- 65: Gitter des Anlageteils 6
- 7: Befestigungsteil
- 71: Gewinde des Befestigungsteils 7
- 72: Kopfteil des Befestigungsteils 7
- 73: Verbindung zwischen Anlageteil 6 und Befestigungsteil 7

## Patentansprüche

1. Krafteinleitungselement (5)
- mit einem flächigen Anlageteil (6), der mit einer zum Festlegen an einer Schicht innerhalb eines Substrats oder an dessen Oberfläche dienenden Unterseite (61) und mit einer dieser Unterseite (61) entgegengesetzt abgewandten Oberseite (62) versehen ist, und
- mit einem von der Oberseite (62) vorspringenden, zum form-, kraft- und/oder stoffschlüssigen Anlenken mindestens eines Drittgegenstands dienenden Befestigungsteil (7),
**dadurch gekennzeichnet,**
**dass** der Anlageteil (6) so ausgestaltet ist, dass dessen Unterseite (61) als an die Form der Schicht oder Oberfläche des Substrats anschmiegend verformbar ausgebildet ist,
**dass** der Anlageteil (6) von der Oberseite (62) zur Unterseite über deren gesamte Fläche lichtdurchlässig ist und
**dass** der Anlageteil zumindest eine Lage eines Metallgitters oder Metallgewebes aufweist.

2. Krafteinleitungselement (5)
- mit einem flächigen Anlageteil (6), der mit einer zum Festlegen an der Oberfläche eines Gegenstandes dienenden Unterseite (61) sowie mit einer dieser entgegengesetzt abgewandten Oberseite versehen ist, und
- mit einem von der Oberseite vorspringenden, zum kraft-, form- oder stoffschlüssigen Anlenken von Drittgegenständen dienenden Befestigungsteil,
**dadurch gekennzeichnet,**
**dass** der Anlageteil so ausgestaltet ist, dass dessen Unterseite als an die Form der Oberfläche des Gegenstandes anschmiegend verformbar ausgebildet ist,
**dass** der Anlageteil von der Ober- zu der Unterseite über deren gesamten Fläche lichtdurchlässig ist und
**dass** der Anlageteil zumindest eine Lage eines Metallgitters oder Metallgewebes aufweist.

3. Krafteinleitungselement gemäß Anspruch 1 oder 2, **dadurch gekennzeichnet, dass** der Anlageteil (6)
- so ausgestaltet ist, dass dessen Unterseite (61) als nach dem Verformen formstabil ausgebildet ist, und/oder
- offen strukturiert ausgebildet ist.

4. Krafteinleitungselement gemäß mindestens einem der Ansprüche 1 bis 3, **dadurch gekennzeichnet, dass** der Anlageteil (6) über seine gesamte Flächegleichmäßig lichtdurchlässig, ist.

5. Krafteinleitungselement gemäß mindestens einem der Ansprüche 1 bis 4, **dadurch gekennzeichnet, dass** der Anlageteil (6) über seine gesamte Fläche für ultraviolettes (UV) Licht durchlässig ist.

6. Krafteinleitungselement gemäß mindestens einem der Ansprüche 1, 3 bis 5, **dadurch gekennzeichnet, dass** der Anlageteil (6)
- durch Einlaminieren an der Schicht innerhalb des Substrats oder
- durch Ankleben auf der Oberfläche des Substrats festgelegt ist.

7. Krafteinleitungselement gemäß Anspruch 6, **dadurch gekennzeichnet, dass** der Anlageteil (6) mittels U[ltra]V[iolett]-härtbaren Klebstoffs oder mittels Wärmeklebers auf der Oberfläche des Substrats festgelegt ist.

8. Krafteinleitungselement gemäß mindestens einem der Ansprüche 1 bis 7, **dadurch gekennzeichnet, dass** der Werkstoff des Krafteinleitungselements (5), insbesondere des Anlageteils (6), Metall aufweist, insbesondere aus Metall besteht.

9. Krafteinleitungselement gemäß mindestens einem der Ansprüche 1 bis 8, **dadurch gekennzeichnet, dass** der Befestigungsteil (7) als am Anlageteil (6) form-, kraft- und/oder stoffschlüssig festgelegt ist.

10. Krafteinleitungselement gemäß mindestens einem der Ansprüche 1 bis 9, **dadurch gekennzeichnet, dass** der Befestigungsteil (7) als Bolzen oder als Buchse oder als Öse oder als Stift ausgebildet ist.

11. Krafteinleitungselement gemäß mindestens einem der Ansprüche 1 bis 10, **dadurch gekennzeichnet, dass** der Befestigungsteil (7), insbesondere in seiner Ausbildung als Bolzen, ein Außengewinde (71) aufweist.

12. Verwendung eines Krafteinleitungselements (5) gemäß mindestens einem der Ansprüche 1 bis 11 mit U[ltra]V[iolett]-härtbarem Klebstoff auf seiner Unterseite (61).

13. Verwendung gemäß Anspruch 12 **gekennzeichnet durch** den Einsatz einer U[ltra]V[iolett]-Lichtquelle auf der Oberseite (62) zum Aushärten des U[ltra]V[iolett]-härtbaren Klebstoffs auf der Unterseite (61).

14. Verwendung gemäß Anspruch 12 oder 13, **gekennzeichnet durch** Induktionserwärmung und/oder Widerstandserwärmung zum Zwecke des Aushärtens.

## Claims

1. Force introduction element (5)
- with a flat contact part (6) which is provided with an underside (61) serving for fixing to a layer within a substrate or on the surface thereof and with an upper side (62) facing away from this underside (61) in the opposite direction, and
- with a fastening part (7) projecting from the upper side (62) and serving for the positive, force-locking and/or material-locking steering of at least one third object,
**characterized in that**
the contact part (6) is designed such that its underside (61) is designed to be deformable so as to conform to the shape of the layer or surface of the substrate,
the contact part (6) is translucent from the top side (62) to the underside over its entire surface and
the contact part has at least one layer of a metal lattice or metal fabric.

2. Force introduction element (5)
- with a flat contact part (6) which is provided with an underside (61) serving for fixing to the surface of an object and with an upper side facing away from it in the opposite direction, and
- with a fastening part projecting from the upper side for the force-, shape- or material-locking steering of third objects,
**characterized in that**
the contact part is designed in such a way that its underside is adapted to be deformable so as to conform to the shape of the surface of the object,
the contact part is translucent from the upper to the lower side over its entire surface and
the contact part has at least one layer of a metal lattice or metal fabric.

3. Force introduction element according to claim 1 or 2, **characterized in that** the contact part (6)
- is designed such that its underside (61) is adapted to be dimensionally stable after deformation, and/or
- is openly structured.

4. Force introduction element according to at least one of claims 1 to 3, **characterized in that** the contact part (6) is uniformly translucent over its entire surface.

5. Force introduction element according to at least one of claims 1 to 4, **characterized in that** the contact part (6) is transparent to ultraviolet (UV) light over its entire surface.

6. Force introduction element according to at least one of claims 1, 3 to 5, **characterized in that** the contact part (6) is determined
- by laminating to the layer within the substrate, or
- by adhesion to the surface of the substrate.

7. Force introduction element according to claim 6, **characterized in that** the contact part (6) is fixed to the surface of the substrate by means of ultraviolet-curable adhesive or by means of thermal adhesive.

8. Force introduction element according to at least one of claims 1 to 7, **characterized in that** the material of the force introduction element (5), in particular of the contact part (6), has metal, in particular consists of metal.

9. Force introduction element according to at least one of claims 1 to 8, **characterized in that** the fastening part (7) is fixed in a form-fitting, force-locking and/or material-locking manner on the contact part (6) .

10. Force introduction element according to at least one of claims 1 to 9, **characterized in that** the fastening part (7) is designed as a bolt or as a bush or as an eye or as a pin.

11. Force introduction element according to at least one of claims 1 to 10, **characterized in that** the fastening part (7) has an external thread (71), in particular in its design as a bolt.

12. Use of a force introduction element (5) according to at least one of claims 1 to 11 with ultraviolet-curable adhesive on its underside (61).

13. Use according to claim 12, **characterized by** using an ultraviolet light source on the top (62) to cure the ultraviolet-curable adhesive on the bottom (61).

14. Use according to claim 12 or 13, **characterized by** induction heating and/or resistance heating for the purpose of curing.

## Revendications

1. Elément d'introduction de force (5)
- avec une partie de contact plate (6) qui est munie d'une face inférieure (61) servant à la fixation sur une couche à l'intérieur d'un substrat ou sur sa surface et avec une face supérieure (62) tournée dans la direction opposée à cette face inférieure (61), et
- avec une pièce de fixation (7) faisant saille de la face supérieure (62), et servant au guidage d'au moins un troisième objet par complémentarité de forme, verrouillage par force et/ou verrouillage par matériau,
**caractérisé en ce que**
la partie de contact (6) est conçue de telle sorte que sa face inférieure (61) est conçue pour être déformable afin de se conformer à la forme de la couche ou de la surface du substrat,
la partie de contact (6) est translucide de la face supérieure (62) à la face inférieure sur toute sa surface et
la partie de contact présente au moins une couche d'un treillis métallique ou d'un tissu métallique.

2. Elément d'introduction de force (5)
- avec une partie de contact plate (6) qui est munie d'une face inférieure (61) servant à la fixation à la surface d'un objet et d'une face supérieure tournée vers l'opposé de celle-ci, et
- avec une pièce de fixation faisant saille de la face supérieure pour le verrouillage de force, de forme ou de matériau d'un troisième objet,
**caractérisé en ce que**
la partie de contact est conçue de telle sorte que sa face inférieure est conçue pour être déformable de manière à se conformer à la forme de la surface de l'objet,
**en ce que** la partie de contact est translucide de la face supérieure à la face inférieure sur toute sa surface et
**en ce que** la partie de contact présente au moins une couche d'un treillis métallique ou d'un tissu métallique.

3. Elément d'introduction de force selon la revendication 1 ou 2, **caractérisé en ce que** la partie de contact (6)
- est conçu de telle sorte que sa face inférieure (61) est adapté pour être dimensionnellement stable après déformation, et/ou
- est ouvertement structuré.

4. Elément d'introduction de force selon au moins l'une des revendications 1 à 3, **caractérisé en ce que** la partie de contact (6) est uniformément translucide sur toute sa surface.

5. Elément d'introduction de force selon au moins l'une des revendications 1 à 4, **caractérisé en ce que** la partie de contact (6) est transparente à la lumière ultraviolette (UV) sur toute sa surface.

6. Elément d'introduction de force selon au moins l'une des revendications 1, 3 à 5, **caractérisé en ce que** la partie de contact (6) est déterminée
- par stratification sur la couche à l'intérieur du substrat, ou
- par l'adhérence à la surface du substrat.

7. Elément d'introduction de force selon la revendication 6, **caractérisé en ce que** la partie de contact (6) est fixée à la surface du substrat au moyen d'une colle durcissable ultraviolet ou d'une colle thermique.

8. Elément d'introduction de force selon au moins l'une des revendications 1 à 7, **caractérisé en ce que** le matériau de l'élément d'introduction de force (5), en particulier de la partie secondaire (6), est métallique, en particulier en métal.

9. Elément d'introduction de force selon au moins l'une des revendications 1 à 8, **caractérisé en ce que** l'élément de fixation (7) est fixé sur l'élément de contact (6) par complémentarité de forme, verrouillage par force et/ou verrouillage par matériau

10. Elément d'introduction de force selon au moins l'une des revendications 1 à 9, **caractérisé en ce que** la pièce de fixation (7) est réalisée sous la forme d'un boulon ou d'une douille ou d'un anneau ou d'une cheville.

11. Elément d'introduction de force selon au moins l'une des revendications 1 à 10, **caractérisé en ce que** la pièce de fixation (7) présente un filetage extérieur (71), en particulier dans sa forme de boulon.

12. Utilisation d'un élément d'introduction de force (5) selon au moins l'une des revendications 1 à 11 avec un adhésif durcissable ultraviolet sur sa face inférieure (61).

13. Utilisation selon la revendication 12, **caractérisée par** l'utilisation d'une source lumineuse ultraviolette sur la face supérieure (62) pour durcir l'adhésif durcissable ultraviolet sur la face inférieure (61) .

14. Utilisation selon la revendication 12 ou 13, **caractérisée par** un chauffage par induction et/ou un chauffage par résistance en vue du durcissement.
